Europäisches Patentamt

(19) European Patent Office  (11) Publication number: **0 105 674**
Office européen des brevets  **B1**

(12) **EUROPEAN PATENT SPECIFICATION**

(45) Date of publication of patent specification: **11.04.90**  (51) Int. Cl.⁵: **A 01 K 95/00, B 29 C 45/00, B 29 C 45/14**

(21) Application number: **83305632.8**

(22) Date of filing: **22.09.83**

(54) **Weights and their manufacture.**

(30) Priority: **27.09.82 GB 8227505**
**12.07.83 GB 8318830**

(43) Date of publication of application:
**18.04.84 Bulletin 84/16**

(45) Publication of the grant of the patent:
**11.04.90 Bulletin 90/15**

(84) Designated Contracting States:
**AT BE CH DE FR GB IT LI LU NL SE**

(56) References cited:
**FR-A- 586 204**
**FR-A- 738 681**
**FR-A- 911 966**
**US-A-2 701 427**
**US-A-2 753 653**
**US-A-3 019 545**
**US-A-3 067 538**
**US-A-3 069 802**
**US-A-3 192 662**
**US-A-3 608 230**

(73) Proprietor: **Royal Ordnance Speciality Metals (a public limited company)**
**Griffin House 5 The Strand**
**London WC2N 5BB (GB)**

(72) Inventor: **Hayward, Andrew Colston**
**34 Glenwood Rise**
**Stonnall Staffordshire (GB)**

(74) Representative: **McCormack, Derek James et al**
**Royal Ordnance plc 11 The Strand Patents and Licensing Department 2nd Floor**
**London WC2N 5JT (GB)**

Courier Press, Leamington Spa, England.

## Description

This invention relates to shaped weights for fishing lines, and to the manufacture of such weights.

Compact weights for fishing lines are commonly shaped by sintering and machining of such metals as tungsten and its alloys to be used as balancing weights or the like. These are relatively expensive to produce and for many purposes the more traditional cast lead is used, this material being capable of being deformed by pinching to grip the fishing line. It has also been proposed to manufacture fishing weights by adding lead powder to a settable or mouldable material, to produce a formed weight adapted to have the fishing line tied around it (US 3 192 662) or to produce a pliable mass that is shaped on the line (US 3 638 347 and GB 2 048 631A) or on a tubular core member (US 3 782 025).

The use of lead has a number of disadvantages. Particular concern has been expressed in recent years about the toxic effects of lead on wildlife, particularly near freshwater fishing sites. Also, lead weights particularly in the smaller sizes are awkward to handle and are inconvenient to fix onto or release from a fishing line, because it is necessary to deform the material to clamp it onto the line. As regards the weights proposed in US 3 192 662, these require a degree of dexterity to attach them to a line and each will be suitable for only a narrower range of line thicknesses. The pliable weights that have been proposed are liable to be easily loosened or detached if they encounter an obstacle in the water or due to the forces acting on them when the line is cast.

It has also been proposed to make fishing weights consisting of a wolframite mass in an outer jacket (US 3 852 907), these being mainly usable only as sinkers, since they do not grip the fishing line, but a construction is described in the patent specification that allows the weight to be fixedly clamped on the line because the outer jacket is of lead and has a cusp-like indent by which it is crimped onto the line. It may be noted in this last example, therefore, that although a major part of the mass is of wolframite, the outer lead jacket presents substantially the samer toxic hazard as a weight made wholly of lead. Moreover, this form of weight will either require considerable force to clamp it firmly onto the line or will be susceptible to gross deformation limiting its capability for reuse.

According to one aspect of the present invention, there is provided a fishing weight comprising at least two main body parts linked by flexible hinge means so that the parts can be closed together to engage a fishing line by flexing the hinge, the main body parts each comprising a mass of metal particles embedded in a matrix formed from a settable or hardenable polymeric material, characterised in that the hinge is formed by a strip or wire of a non-toxic metal or alloy, and each end of the strip or wire is moulded into a respective main body part.

In terms of its relative weight, the matrix material preferably amounts to not substantially more than 20% of the total. Advantageously it amounts to not more than than 10%, and for a maximum density product it amounts to not more than 5% by weight of the total.

Preferably the hinge means is formed of a metal having a high degree of ductility for the hinge means, capable of holding the body parts firmly together when closed and of being reused many times. Conveniently, a strip or wire of uniform or non-uniform cross-section copper or like ductile metal or alloy is used for the hinge means in this case.

US Patent No. 3,069,802 describes a fishing weight having a metal member for attaching the weight to a fishing line. However, the member is fitted to one weight body part only for the purpose of attaching that part to the line, not for attaching the part flexibly to another body part. The weight is made of lead not a mass of metal particles embedded in a polymeric matrix.

A preferred method of manufacturing the weight according to the invention employs two mould parts which cooperate to provide between them a series of moulding cavities arranged in at least one row, the hinge strip or wire of a non-toxic metal or alloy being laid between the mould parts before they are closed together so that it extends through the cavities of said row, separating means within the cavities projecting into each cavity to one side of the strip or wire therein, whereby the admission of the moulding mass into each space forms the body parts with a gap between them to one side of the hinge means. The mould cavities can then be arranged in the form of a grid whereby the strips mould parts before they are closed together so that it extends through the cavities of said low, separating means within the cavities projecting into each cavity to one side of the strip or wire therein, whereby the admission of the moulding mass into each space forms the two body parts with a gap between them to one side of the hinge means. The mould cavities can then be arranged in the form of a grid whereby the strips or wires for the hinge means extends through rows of cavities in one direction and bar-like separating means extend through rows of cavities in a direction transverse to said one direction.

In a further form of the invention the hinge may be arranged to act as a spring which links the body parts to hold them together by compression forces so that the weight can be held on a fishing line by these forces.

By way of non-limitative illustration, the following are examples of suitable high density composite materials for weights produced in accordance with the invention.

### Example 1

Pre-pressed and crushed tungsten powder was sieved in a 100 mesh sieve to remove very fine particles and mixed with silicone rubber, in the proportions 97.1% by weight powder and 2.9% by weight silicone rubber (e.g. that produced under the Trade Mark Silcoset 152 by Imperial Chemical Industries PLC of Great Britain), in a paddle mixer. The resulting mixture could be formed by injection moulding or by extrusion and yielded a resilient material with a specific gravity of 10.6 gm/cc, i.e. close to the density of lead.

Example 2

In the process of example 1, 3.8% by weight silicone rubber was added to 96.2% by weight tungsten powder and yielded a material with a specific gravity of 9.6 gm/cc.

Example 3

In the process of example 1, 7.2% by weight silicone rubber was mixed with 92.8% by weight tungsten powder to yield a material with a density of 8.8 gm/cc.

Example 4

Tungsten or tungsten alloy powder prepared in the manner described in example 1 was mixed with low density polyethylene (e.g. 8503 GUB1 produced by Du Pont of Canada), in the proportions by weight of 96% metal powder and 4% polyethylene. The mix was milled in a ball mill, then transferred to a chamber and heated to 260°C before being extruded through small orifices. The extruded material was allowed to cool and was broken into small pieces to provide a suitable feed material for an injection moulding process. The material had a density of 9.6 gm/cc.

Other settable or hardenable materials, in particular polymeric materials, can be used as the matrix for the metal powder provided a suitably stable configuration results, and metals other than tungsten can be used to the extent that they yield a product with a sufficiently high specific gravity. In general, a satisfactory product will require not substantially less than 2.5% by weight of the matrix material, but the upper limit is set only by the minimum acceptable density of the final material.

It is also possible to produce a composite matrix/metal material for use in the invention having as the matrix a two-part polymer/hardener as the matrix material. In that case, the metal powder may be mixed with one part of the matrix material before the remaining part is added.

Reference will now be made to the accompanying drawings which illustrate fishing line weights according to the invention that can be made in various sizes, and methods of manufacturing such weights. In the drawings,

Fig. 1 is a sectional view of a form of weight;

Figs 2. and 3 are schematic illustrations of a method of manufacturing the weight of Fig. 1;

Fig. 4 is a sectional view of another form of weight; and

Figs. 5 and 6 are schematic illustrations of the method of manufacturing the weight of Fig. 4.

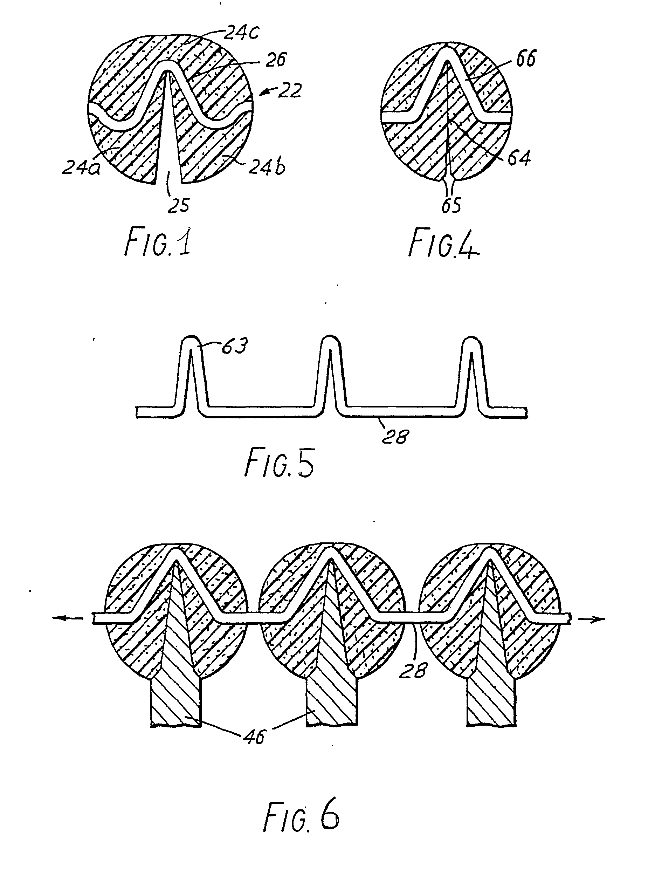

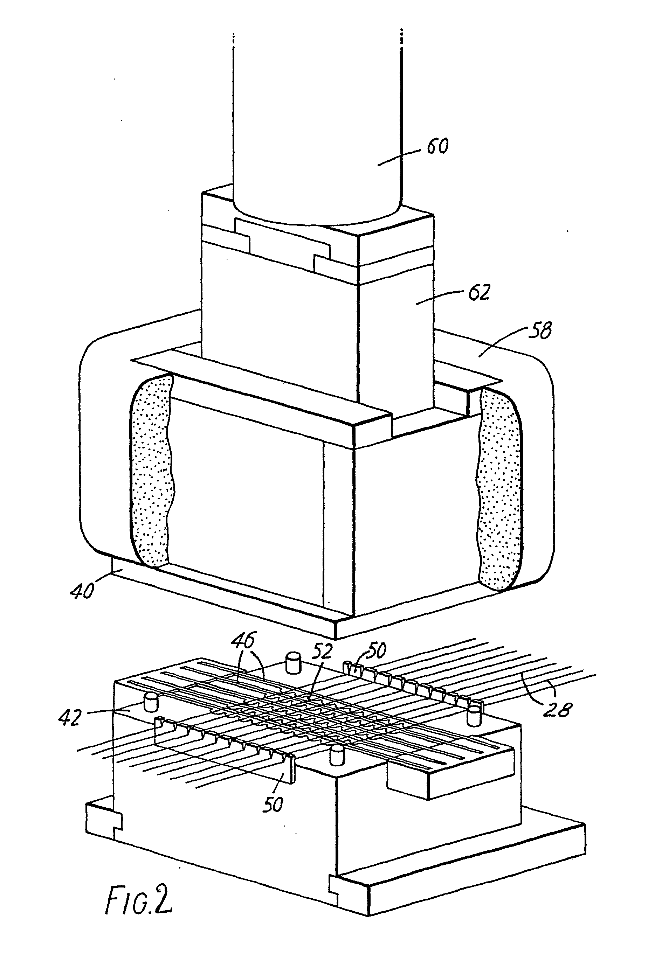

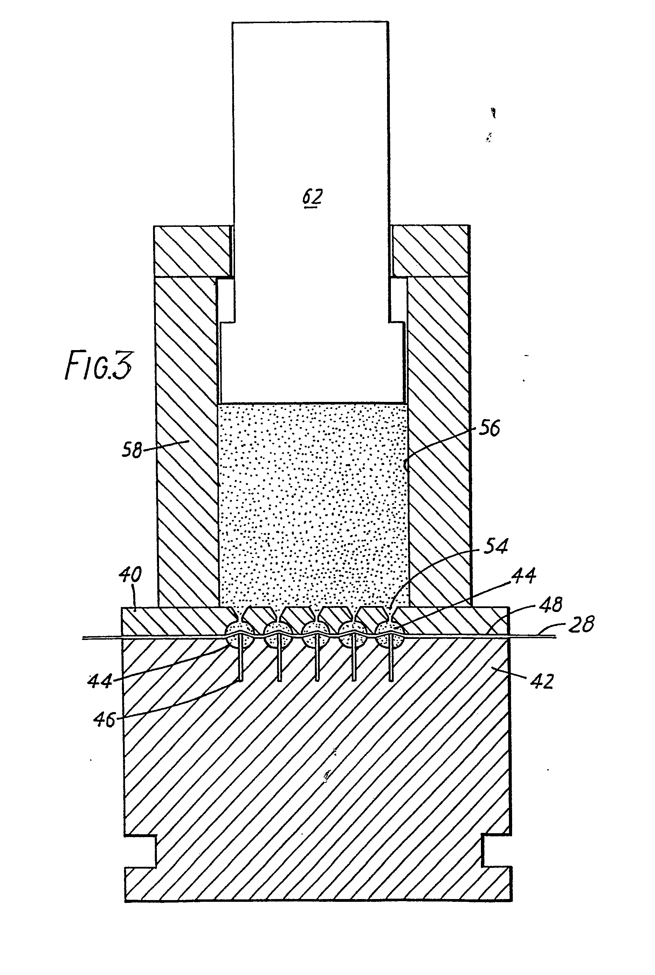

Fig. 1 illustrates a form of weight 22, comprising two substantially hemispherical main body parts 24a, 24b joined by a narrower intermediate portion 24c, a wedge-form gap 25 of about 12° being formed across the major part of the diametrical section of the weight in the central hinge plane. A copper wire 26 of the 0.4mm diameter extends across the narrower intermediate portion and into both body parts to form a hinge between the body parts.

When a fishing line is placed in the gap and the body parts are pressed together, the copper wire provides a hinge pivot to close the body parts onto the line. Because of the use flexible wire as a hinge, the moulded mass that forms the main body parts may be relatively inelastic and even brittle, so that the portion 24c in the region of the central hinge plane fractures as the copper wire is flexed. The flexural strain on the small exposed portion of the wire deforms it plastically so that the line is firmly gripped. The high ductility of the copper allows the hinge joint to be opened and closed many times so that the weight can be reused.

The weight illustrated in Fig. 1 has been manufactured by the method illustrated in Figs. 2 and 3 where an injection moulding machine is shown for producing a large number of weights simultaneously. Upper and lower mould parts 40, 42 have mating, substantially hemispherical recesses 44 arranged in rows on a rectangular grid. Running along the rows in one direction, through the centres of the recesses in the lower mould part, are a series of separating blades 46. These blades have a wedge-form cross section with the apex at approximately three quarters the height of the mould.

Shallow grooves 48 run across the top face of the lower mould half at right angles to the blades to intersect the rows of recesses at the centres of the recesses. In these grooves lengths of copper wire 28 run out from spools (not shown) are laid under tension across the top face of the mould half 42, through guides 50. Notches 52 in the blades accomodate the wires where they cross so that each blade extends slightly above the wires in the space between the wires.

The upper mould half has a series of exit nozzles 54 from a charge chamber 56 to which it is secured and which is encased in a heating jacket 58. The material to be moulded is prepared for the charge chamber in the form of pellets of the powdered metal mixed in a plastics matrix, a suitable material being that described in Example 4 above. In the charge chamber this material is reheated to 260°C and under pressure is forced by a ram 60, on which charge plunger 62 is mounted, into the mould cavities in a fluid state. As a result of the pressure of the entering material, the copper wire is stretched to the bowed shapes shown in Fig. 1 so that the hinges are firmly anchored in the main mass of the material forming the body parts.

When the mould is opened the weights may be removed as a single array with the individual weights held together by the length of wire in one direction and by flashes of moulding material in a direction at 90° to the wire. The individual weights can then be separated as required.

Referring again to Fig. 1 it will be noted that because of the projection of the apex of the blade above the wire hinge to some three quarters of the height of the weight, in the central hinge plane the moulded material will only occupy a small area to one side of the wire and spaced therefrom except for a minimal region corresponding to the notch in the separating blade for the width of the wire. When finger pressure is applied to the body parts to close them onto a fishing line, therefore the moulded mass in the central hinge plane is subjected to tensile forces which, having regard to the high powder content of the mass and the nature of the matrix material, causes it to fracture easily and leave the copper wire as the sole effective hinge element. Only a minimal length of wire is not constrained by being embedded in the moulded mass and the hinging flexure will therefore be confined to a small region with the result that plastic deformation will occur and ensure that the fishing line inserted in the wedge-like gap is firmly gripped. The high ductility of copper nevertheless ensures that the hinge can be opened and closed many times to allow the weight to be reused.

The weight illustrated in Fig. 4 has been manufactured by the method illustrated in Figs. 5 and 6 using apparatus similar to that shown in Figs. 2 and 3, but where the strip or wire 28 is now made of a spring material of uniform or non-uniform cross-section shaped as shown in Fig. 5 with a series of spaced corrugations 63. In this case the spring material is pre-tensioned before moulding thus ensuring that on completion of manufacture each corrugation acts as a spring 66 and the two faces 64 of the weight so made are under compression, being pulled together by the spring. The blades 46 are so shaped that there is a groove or rebate 65 on the outer edge of the slot when the faces 64 come together. This enables the weight to be pushed onto a fishing line or other filamentary element with positional stability being maintained by the frictional forces generated from the compressive load extended by the spring 66. This self-gripping form of weight can be re-used many times.

In each of the examples illustrated, in order to grip a fishing line more securely the opposed faces (64 in Fig. 4) of the body parts may be roughened, eg. by moulding ridges or other contouring on these faces.

**Claims**

1. A fishing weight comprising at least two main body parts linked by flexible hinge means so that the parts can be closed together to engage a fishing line by flexing the hinge, the main body parts each comprising a mass of metal particles embedded in a matrix formed from a settable or hardenable polymeric material, characterised in that the hinge is formed by a strip or wire (26 or 66) of a non-toxic metal or alloy, and each end of the strip or wire is moulded into a respective main body part (24a, 24b).

2. A fishing weight according to claim 1 characterised in that the end portions of the said strip or wire (26, 66) which are moulded into the body parts (24a, 24b) are of non-rectilinear form.

3. A fishing weight according to claim 1 or claim 2 characterised in that main body parts comprise powder of tungsten or tungsten alloy.

4. A fishing weight according to claim 3 characterised in that the matrix material is silicone rubber or polyethylene.

5. A fishing weight according to any one of the preceding claims characterised in that the strip or wire is of a ductile metal.

6. A fishing weight according to claim 5 characterised in that the strip or wire is of copper.

7. A fishing weight according to any one of claims 1 to 4 characterised in that the strip or wire is of a prestressed material.

8. A method of manufacturing a plurality of weights each comprising a plurality of body parts (24a, 24b) of a material comprising a mass of metal (i.e. elemental metal or alloy compositions etc.) particles embedded in a matrix formed of a settable or hardenable polymeric material, said body parts being linked by flexible hinge means (6 or 26 or 66) whereby the parts can be closed together to engage a fishing line or other filamentary element by flexing the hinge, said method employing two mould parts (40, 42) providing a series of moulding cavities (44) arranged in at least one row, a flexible strip or wire (28) of a non-toxic metal or alloy for forming the hinge means (26 or 66) being laid between the mould parts before they are closed together so that it extends through the cavities of said row, separating means (46) within the cavities projecting into each cavity to one side of the strip or wire therein, whereby the admission of the moulding mass into said spaces forms the body parts with gaps between them to one side of the hinge means.

9. A method according to claim 8 wherein the separating means within each cavity comprise a member in the form of a blade or bar (46) having a thickness tapering towards said flexible strip (28) and on which said strip bears while in the mould.

10. A method according to claim 8 or claim 9 wherein said strip is accommodated in notches (52) in said blades.

11. A method according to any one of claims 8 to 10 wherein said strip forming the hinge means (26 or 66) is given a non-rectilinear form over portions embedded in the body parts.

12. A method according to any one of claims 8 to 11 wherein said strip is held in the row of cavities under tension and comprises corrugations (63) so arranged that a corrugation is located on each said blade (46), whereby when the moulded weights are removed from the mould and blades, the pre-tensioned corrugations form springs (66) urging together the interlinked body parts.

13. A method according to any one of claims 8 to 12 wherein the mould cavities (44) are arranged in the form of a grid with said strips or wires (28) for the hinge means extending through parallel rows of cavities in one direction and the separating means being in the form of blades or bars (46) extending through parallel rows of cavities in a direction transverse to said one direction.

## Patentansprüche

1. Angelgewicht mit mindestens zwei Körperhauptteilen, die duch ein flexibles Gelenk so miteinander verbunden sind, daß die Teile im Sinne des Erfassens einer Angelschnur miteinander schließbar sind, wobei die Körperhauptteile jeweils eine Masse aus Metallteilchen aufweisen, die in eine Matrix aus einem abbindbaren oder aushärtbaren polymerischen Material eingebettet sind, dadurch gekennzeichnet, daß das Gelenk durch einen Streifen oder Draht (26 oder 66) aus nichttoxischem Metall- bzw. Legierungsmaterial gebildet ist und beide Enden dieses Streifens bzw. Drahtes in das jeweilige Körperhauptteile (24a, 24b) eingebettet sind.

2. Angelgewicht nach Anspruch 1, dadurch gekennzeichnet, daß die Endteile des Streifens bzw. Drahtes (26, 66), die in die Körperteile (24a, 24b) eingebettet sind, nichtgeradlinige Form haben.

3. Angelgewicht nach Anspruch 1 oder 2, dadurch gekennzeichnet, daß die Hauptkörperteile Wolframpulver oder Wolframlegierungspulver enthalten.

4. Angelgewicht nach Anspruch 3, dadurch gekennzeichnet, daß das Matrixmaterial Silikongummi oder Polyäthylen ist.

5. Angelgewicht nach einem der vorhergehenden Ansprüche, dadurch gekennzeichnet, daß der Streifen bzw. Draht aus zähem Metall besteht.

6. Angelgewicht nach Anspruch 5, dadurch gekennzeichnet, daß der Streifen bzw. Draht aus Kupfer besteht.

7. Angelgewicht nach einem der Ansprüche 1 bis 4, dadurch gekennzeichnet, daß der Streifen bzw. Draht aus vorgespannten Material besteht.

8. Verfahren zur Herstellung einer Mehrzahl von Gewichten, die jeweils eine Mehrzahl von Körperteilen (24a, 24b) aus einem Material aufweisen, das eine Masse aus Metallteilchen (d.h. elementarem Metall oder Legierungszusammensetzungen usw.) in einer Matrix aus abbindbaren oder aushärtbarem polymerischem Material eingebettet enthalten, wobei die Körperteile durch flexible Gelenke (6 bzw. 26 bzw. 66) miteinander verbunden sind, derart, daß die Teile zum Umgreifen einer Angelschnur oder eines anderen fadenförmigen Gegenstands durch Biegen des Gelenks zusammenschließbar sind, wobei des Verfahren die Verwendung zweier Formteile (40, 42) umfaßt, die eine Reihe von Formhohlräumen (44) bilden, die in mindestens einer Reihe angeordnet sind, wobei weiter ein flexibler Streifen oder Draht (28) aus einem nichttoxischem Metall- oder Legierungsmaterial zur Herstellung der Gelenke (26 bzw. 66) zwischen die Formteile eingelegt wird, bevor diese geschlossen werden, so daß er durch die Hohlräume der genannten Reihe hindurchverläuft, und wobei Trennmittel (46) innerhalb der Hohlräume verwendet werden, die in jeden Hohlraum auf eine Seite des darin befindlichen Streifens oder Drahtes hineinragen, derart daß die Zufuhr einer Gießmasse in die Hohlräume die Körperteile mit gegenseitigen Zwischenräumen auf einer Seite der Gelenke herstellt.

9. Verfahren nach Anspruch 8, wobei die Trennmittel in jedem Hohlraum ein Teil in Form einer Lamelle oder Latte (46) mit einer Dicke aufweisen, die sich zu den flexiblen Streifen (28) hin verjüngt und auf welchem der Streifen sich in der Form abstützt.

10. Verfahren nach Anspruch 8 oder 9, wobei der Streifen in Einschnitten (52) der Lamellen aufgenommen ist.

11. Verfahren nach einem der Ansprüche 8 bis 10, wobei der die Gelenke (26 bzw. 66) bildende Streifen über in den Körperteilen eingebetteten Abschnitten eine nichtgeradlinige Form erhält.

12. Verfahren nach einem der Ansprüche 8 bis 11, wobei der Streifen in der Reihe von Hohlräumen unter Spannung gehalten wird und so angeordnete Wellungen (63) aufweist, daß auf jeder der genannten Lamellen (46) eine Wellung gelegen ist, derart, daß ein Herausnehmen der gegossenen Gewichte aus der Form und von den Lamellen die vorgespannten Wellungen Federn (66) bilden, welche die miteinander verbundenden Körperteile zusammendrängen.

13. Verfahren nach einem Ansprüche 8 bis 12, wobei die Formhohlräume (44) in Form eines Gitters angeordnet sind, wobei die Streifen bzw. Drähte (28) für die Gelenke durch parallele Reihen von Hohlräumen in einer Richtung hindurchverlaufen und die Trennmittel in Form von Lamellen oder Latten (46) vorliegen, die durch dazu in Querrichtung verlaufende parallele Reihen von Hohlräumen hindurchverlaufen.

## Revendications

1. Plomb de pêche comprenant au moins deux parties principales de corps reliées par une articulation souple afin que les parties puissent être fermées l'une sur l'autre et que le plomb puisse serrer une ligne de pêche lorsque l'articulation est fléchie, les parties principales de corps comprenant chacune une masse de particules métalliques enrobées dans un liant formé d'un matériau polymère durcissable ou solidifiable, caractérisé en ce que l'articulation est formée par une bande ou un fil métalliques (26 ou 66) d'un métal ou alliage non toxique, et chaque extrémité de la bande ou du fil est moulée dans une partie principale respective de corps (24a, 24b).

2. Plomb de pêche selon la revendication 1, caractérisé en ce que les parties d'extrémité de la bande ou du fil (26, 66) qui sont moulées dans les parties de corps (24a, 24b) ont une forme non rectiligne.

3. Plomb de pêche selon la revendication 1 ou 2, caractérisé en ce que les parties principales de corps comportent une poudre de tungstène ou d'un alliage de tungstène.

4. Plomb de pêche selon la revendication 3, caractérisé en ce que le matériau liant est un caoutchouc de silicone ou un polyéthylène.

5. Plomb de pêche selon l'une quelconque des revendications précédentes, caractérisé en ce que la bande ou le fil est formé d'un métal ductile.

6. Plomb de pêche selon la revendication 5, caractérisé en ce que la bande ou le fil est formé de cuivre.

7. Plomb de pêche selon l'une quelconque des revendications 1 à 4, caractérisé en ce que la bande ou le fil est formé d'un matériau soumis à des contraintes préalables.

8. Procédé de fabrication de plusieurs plombs, comprenant chacun plusieurs parties de corps (24a, 24b) d'un matériau comprenant une masse de particules métalliques (c'est-à-dire de compositions d'un métal élémentaire ou d'un alliage, etc.) enrobées dans un liant formé d'une matériau polymère durcissable ou solidifiable, les parties de corps étant reliées par une articulation souple (6 ou 26 ou 66), si bien que les parties peuvent être fermées l'une sur l'autre afin qu'elles soient au contact d'une ligne de pêche ou d'un autre élément filamentaire par flexion de l'articulation, le procédé mettant en oeuvre deux parties de moule (40, 42) formant une série de cavités de moulage (44) disposées dans au moins une rangée, une bande ou un fil souple (28) d'un métal ou alliage non toxique, destiné à former l'articulation (26 ou 66) étant placé entre les parties de moule avant fermeture de celles-ci si bien qu'il est disposé dans les cavités de la rangée, un dispositif (46) de séparation placé dans les cavités et dépassant dans chaque cavité d'un côté de la bande ou du fil placé à intérieur, si bien que l'introduction d'une masse de moulage dans les espaces forme les parties de corps avec des espaces les séparant d'un côté de l'articulation.

9. Procédé selon la revendication 8, dans lequel le dispositif de séparation placé dans chaque cavité comprend un organe sous forme d'une lame ou d'une barre (46) dont l'épaisseur diminue vers la bande souple (28) et sur laquelle la bande est en appui lorsqu'elle dans le moule.

10. Procédé selon la revendication 8 ou 9, dans lequel la bande est logée dans des encoches (52) formées dans les lames.

11. Procédé selon l'une quelconque des revendications 8 à 10, dans lequel la bande formant les articulations (26 ou 66) a une forme non rectiligne et est disposée sur des parties enrobées dans les parties de corps.

12. Procédé selon l'une quelconque des revendications 8 à 11, dans lequel la bande est maintenue dans la rangée de cavités sous tension et comporte des ondulations (63) disposées de manière qu'une ondulation soit placée sur chaque lame (46), si bien que, lorsque les plombs moulés sont retirés du moule et des lames, les ondulations préalablement mises sous tension forment des ressorts (66) rappelant les parties liées de corps l'une vers l'autre.

13. Procédé selon l'une quelconque des revendications 8 à 12, dans lequel les cavités (44) de moulage sont sous forme d'une grille, les bandes ou fils (28) d'articulation étant disposés dans des rangées parallèles de cavité dans une première direction et les dispositifs de séparation sous forme de lames ou de barres (46) étant disposés dans des rangées parallèles de cavités en direction transversale à la première direction.

FIG.1

FIG.4

FIG.5

FIG.6

FIG.2

FIG.3

62

58

56

54

40

44

48

28

44

46

42